(19)

Europäisches
Patentamt
European
Patent Office
Office européen
des brevets

(11) **EP 2 006 805 A2**

(12) **EUROPEAN PATENT APPLICATION**
published in accordance with Art. 153(4) EPC

(43) Date of publication:
**24.12.2008 Bulletin 2008/52**

(51) Int Cl.:
***G06T 7/20*** *(2006.01)*

(21) Application number: **07740449.9**

(22) Date of filing: **23.03.2007**

(86) International application number:
**PCT/JP2007/057011**

(87) International publication number:
**WO 2007/108563 (27.09.2007 Gazette 2007/39)**

(84) Designated Contracting States:
**DE FR GB**

(30) Priority: **23.03.2006 JP 2006080784**

(71) Applicant: **TOKYO INSTITUTE OF TECHNOLOGY
Tokyo 152-8550 (JP)**

(72) Inventors:
• **OKUTOMI, Masatoshi
Meguro-Ku, Tokyo 152-8550 (JP)**

• **SHIMIZU, Masao
Meguro-Ku, Tokyo 152-8550 (JP)**
• **CHANG, Soonkeun
Meguro-Ku, Tokyo 152-8550 (JP)**

(74) Representative: **Hooiveld, Arjen Jan Winfried
Arnold & Siedsma
Sweelinckplein 1
2517 GK Den Haag (NL)**

(54) **IMAGE REGISTRATION METHOD**

(57)     The present invention provides a region-selection-based image registration method for estimating motions between an image of interest in an image sequence and a reference image in the image sequence which can be applied to the registration of the object having every geometry and by which the high-precision image registration with robustness to illumination variation and occlusion can be conducted.

An image registration method for conducting a high-precision image registration between a reference image in an image sequence capturing an object and an image of interest in said image sequence, the method **characterized in that** a predetermined region on the reference image is set as a region of interest, when conducting the high-precision image registration, a motion parameter is estimated based on pixels of a mask image representing a region where the registration is performed precisely by a predetermined transformation within the region of interest that is set. The mask image is generated by utilizing the similarity evaluation between images.

FIG.2

Transform (t−1)−th Frame after matching (t−1)−th Frame with Reference Frame

Transform t−th Frame after matching t−th Frame with Reference Frame

Reference Frame

ROI

(t-1) −th Frame

ROI

t −th Frame

ROI

Time

Motion $\mathrm{W}\left(\mathrm{x};\mathbf{h}_{t-1,0}\right)$ between Reference Frame and (t-1) −th Frame

Motion between adjacent frames, i.e., Motion $\mathrm{W}\left(\mathrm{x};\mathbf{h}_{t,t-1}\right)$ between (t-1)−th Frame and t−th Frame

Mask Image $Q_t$ of t−th Frame

(Only Inside of ROI)

EP 2 006 805 A2

**Description**

TECHNICAL FIELD

The present invention relates to an image registration method and, more particularly, to an image registration method estimating motions between an image of interest in an image sequence and a reference image in the image sequence.

BACKGROUND TECHNIQUE

Image registration means a technique that estimates transformation parameter matching two images when two images are put (i.e. when an image of interest is put on a reference image). That is to say, image registration means to estimate motions between the image of interest and the reference image.

Image registration, i.e. motion estimation between the image of interest and the reference image, is the most basic and important processing in much image processing such as super-resolution processing, image mosaicing, three-dimensional reconstruction, stereo vision, depth estimation, image measurement and machine vision (see Non-Patent Document 1 and Non-Patent Document 2).

In order to conduct the image registration, i.e. in order to estimate motion parameter between an image of interest in the image sequence and a reference image in the image sequence, it is often that the motion approximated by planar projective transformation. If only planar region of registration object (hereinafter also simply referred to as "object") is set as a region of interest (ROI), it is possible to obtain accurate motion parameter.

However, because there may not be a plane (planar region) in ROI, it is often that the actual motion of registration object is different from the estimated motion based on planar projective transformation model. Furthermore, it is often that estimation of motion parameter is unsuccessful due to illumination variation, occlusion and so on.

For such a problem, heretofore, many methods such as a method using a base image represents illumination variation (see Non-Patent Document 3 and Non-Patent Document 4), a method to divide in multiple regions (see Non-Patent Document 5 and Non-Patent Document 6), a method modeling the object geometry in quadric surface (see Non-Patent Document 7), a method modeling the complicated geometry such as face (see Non-Patent Document 8), a method using motion segmentation (see Non-Patent Document 9 and Non-Patent Document 10), a method modeling the motion distribution (see Non-Patent Document 11) and a method selecting and using an appropriate region in motion estimation (see Non-Patent Document 12 and Non-Patent Document 13), were proposed.

Of these methods, for example, in the method selecting and using an appropriate region in motion estimation (hereinafter also simply referred to as "a region-selection-based method"), the method disclosed in Non-Patent Document 12, obtains a residual motion weighted by the size of concentration gradient for spatial direction (this residual motion is also referred to as "a normal flow") and evaluates a region where the size of obtained residual motion is small to be a region where the registration is conducted precisely.

However, because this normal flow is easy to be affected by noise that was included in an image, in order to extract a region where the registration is conducted precisely, there is the problem that the post-processing such as a processing in which the results from multiple images are weighted and averaged (see Non-Patent Document 12), and a processing which uses a probability model (see Non-Patent Document 14), is necessary.

In addition, in the method which is disclosed in Non-Patent Document 13 and belongs to the region-selection-based method, because the weight is lowered based on the difference in pixel value of each pixel within ROI between the reference image and the image transformed by the estimated motion, there is the problem that the weight is lowered by illumination variation of object and there is the possibility to fail in registration.

Here, we explain the conventional image registration method using planar projective transformation. That is to say, when image registration is conducted by using the conventional image registration method, the motion between images, i.e. the motion between the input image (the image of interest) in the image sequence and the reference image in the image sequence, is estimated by using a planar projective transformation model.

In order to estimate the parameter representing this planar projective transformation model, i.e. the motion parameter of the image of interest for the reference image, we define an objective function represented by the following Expression 1.

[Expression 1]

$$E\left(\mathbf{h}\right) = \sum_{\mathbf{x} \in \mathrm{ROI}} \left| I\left(\mathbf{W}\left(\mathbf{x};\mathbf{h}\right)\right) - I_0\left(\mathbf{x}\right) \right|^2$$

Where, $I(\mathbf{x})$ represents the input image in the image sequence, $I_0(\mathbf{x})$ represents the reference image, and ROI represents the region of interest. Furthermore, $\mathbf{x}=[x,y,1]^\top$ represents a position on an image expressed by homogeneous coordinate system. $\mathbf{h}=[h_1,h_2,...,h_8]^\top$ represents eight parameters expressing planar projective transformation.

$$\mathbf{W}(\mathbf{x};\mathbf{h}) = \begin{bmatrix} h_1 & h_2 & h_3 \\ h_4 & h_5 & h_6 \\ h_7 & h_8 & 1 \end{bmatrix} \begin{bmatrix} x \\ y \\ 1 \end{bmatrix}$$ represents the motion of the image of interest for the reference image, i.e. represents planar projective transformation.

An arbitrary region can be used as a ROI, but it is often that a rectangle region is used as a ROI. When minimizing the objective function represented by the aforementioned Expression 1, all of pixel values within ROI is used.

In order to estimate the transformation parameter h that minimizes the above Expression 1, for example, the methods such as a gradient method (see Non-Patent Document 15, Non-Patent Document 16, Non-Patent Document 17 and Non-Patent Document 18), a hyperplane intersection method that does not use iterative computation (see Non-Patent Document 19) and a fast method of the hyperplane intersection method disclosed in Non-Patent Document 19 (see Non-Patent Document 20), can be used.

When conducting registration between images that captured an object regarded as a rigid body by the aforementioned conventional image registration methods that just use pixel values within ROI and belong to region-based method, there is a possibility to fail in for the following factors.

That is to say, the failure factors of registration that is conducted by the conventional image registration method that uses planar projective transformation and belongs to region-based method, are the following factors.

Failure Factor 1: the object shape

When capturing a plane by using a camera that arbitrarily changes position and direction in three-dimensional space, it is possible to represent the transformation between images by using the planar projective transformation model. Here, we assume that lens distortion of camera is small so as to be able to ignore it or lens distortion of camera is corrected separately. When the object shape is not a plane, as a matter of course, it is impossible to completely describe the change of the visibility of the object by the planar projective transformation model, and the minimum value of the objective function represented by Expression 1 becomes big. For this reason, there is a possibility to fall into a minimal position that is different from the correct motion parameter and fail in the registration.

Failure Factor 2: the surface reflection characteristic of object

When the position and the direction of a camera change for a plane, both the angle that the camera watches the plane and the distance from the camera to the plane change. If the plane has a Lanbertian surface, the brightness of the plane does not change by the angle that the camera watches the plane and the distance from the camera to the plane. However, actually, because it is rare that the object having planar geometry is an absolute uniform diffuser, the luminance of the object (the plane) changes by the position and direction of the camera for the object (the plane). Therefore, when the luminance of the object (the plane) changes, i.e. when the brightness between images changes, the value of the objective function represented by Expression 1 changes, the minimum value of the objective function becomes big and there is a possibility to fail in the registration.

Failure Factor 3: the change of the distance from the camera to the plane

In the case of registering sequentially the object which was captured as an image sequence, when the distance from the camera to the plane changes, there is a possibility to fail in registration for the following causes.

Firstly, in case that the lens of the camera can be approximated by pinhole lens, i.e. in case that the image sequence which is visually in focus can be always captured even if the distance from the camera to the plane changes, when the distance from the camera to the plane gradually becomes big, such a problem occurs. The object is captured to the reference image greatly, but the object gradually becomes small on the image sequence (i.e. the images which are used as input images) which were captured over time. In order to transform the input image for ROI set on the reference image and conduct the registration, it is necessary to enlarge the input image. With the enlargement of the image, the image inevitably blurs. In the end, conducting the registration of the input image for the reference image, means conducting the registration between images having different blurs, and finally fail in the registration.

Secondly, in case that the lens of the camera can be approximated by thin lens, i.e. in case that the image sequence which is visually in focus can be captured when the object exists in a certain distance range, when the manner of focus sliding for the object changes, a problem like the problem that occurred for the first cause occurs.

Failure Factor 4: the illumination variation

The objective function represented by the above Expression 1, represents sum of squares of difference of pixel value between images. For this reason, of course the value of the objective function changes by the geometry variation between images, but the value of the objective function also changes by a change of brightness of image. The brightness of the object changes by the illumination variation, but the illumination variation becomes the bigger obstacle for the registration when the change of brightness of the object is different by the position on image.

Failure Factor 5: occlusion

When the occlusion of the registration object (target object, i.e. object) and other object exists in ROI, it becomes a big obstacle for the registration. Particularly, when the density and the contrast of texture in the surface of other object that appeared to occlude the target object are higher than the density and the contrast of texture in the surface of the target object, the motion parameter h which minimizes the objective function represented Expression 1 is affected strongly by the position of other object, and there is a possibility to obtain a registration result unlike the position and pose of the target object by using this motion parameter. Furthermore, a shadow of the target object itself occurs by the target object geometry and the position of light source, this shadow can change, but a problem that this shadow as the change of brightness of the target object affects the registration result also occurs.

Conventionally, as the countermeasure against the above-mentioned registration failure factors, many artifices are used. As main countermeasure, there are the following countermeasures.

Countermeasures 1: using the edge information of image

Specifically, for example, it is possible to reduce the influence of the change of brightness of the target object by using Laplacian and Laplacian of Gaussian. Furthermore, it is possible to absorb the change of blur of the target object in a certain degree. However, Countermeasure 1 has a problem that can not correspond to the object having the geometry except plane and occlusion.

Countermeasures 2: normalizing the pixel values

It is possible to reduce the influence of the change of brightness of the target object by minimizing the objective function represented Expression 1 after normalizing the pixel values within ROI. When the motion is limited to translation, normalized cross correlation can be used. When the motion is planar projective transformation, the methods using normalized cross correlation are also proposed (see Non-Patent Document 19 and Non-Patent Document 20). However, Countermeasure 2 has a problem that can not correspond to the object having the geometry except plane and occlusion.

Countermeasures 3: using accumulate operation of motions between adjacent frames

Countermeasure 3 is a countermeasure that utilizes the change of the visibility of the object between adjacent frames being small. Specifically, first, the motion parameter between temporally-adjacent frames ($\mathbf{h}_{t,t-1}$) is sequentially obtained. Then, planar projective transformation for the reference image ($\mathbf{W}[\mathbf{x};\mathbf{h}_{t,0}]$) is obtained as the product of planar projective transformation between adjacent frames ($\mathbf{W}\cdots[\mathbf{W}[\mathbf{W}[\mathbf{x};\mathbf{h}_{t,t-1}];\mathbf{h}_{t-1,t-2}];\cdots;\mathbf{h}_{1,0}]$). However, Countermeasure 3 has a problem that registration error gradually accumulates and in the end displacement occurs.

Countermeasures 4: updating the reference image

A countermeasure that updates the reference image by using an index such as the minimum value of Expression 1 before the input image greatly changes from the reference image, is utilized. However, like Countermeasure 3 (i.e.

the method using accumulate operation of motions between adjacent frames), Countermeasure 4 also has a problem that registration error gradually accumulates and in the end displacement occurs.

DISCLOSURE OF THE INVENTION

The present invention has been developed in view of the above described circumstances, and an object of the present invention is to provide a region-selection-based image registration method for estimating motions between an image of interest in an image sequence and a reference image in the image sequence which can be applied to the registration of the object having every geometry and by which the high-precision image registration with robustness to illumination variation and occlusion can be conducted.

The present invention relates to an image registration method for conducting a high-precision image registration between a reference image in an image sequence capturing an object and an image of interest in said image sequence. The above object of the present invention is effectively achieved by the construction that said method characterized in that a predetermined region on said reference image is set as a region of interest, when conducting said high-precision image registration, a motion parameter is estimated based on pixels of a mask image representing a region where the registration is performed precisely by a predetermined transformation within said region of interest that is set. The above object of the present invention is also effectively achieved by the construction that said mask image is generated by utilizing the similarity evaluation between images. The above object of the present invention is also effectively achieved by the construction that said predetermined transformation is a planar projective transformation, an affine transformation, a scale transformation, a rotation transformation, a parallel transformation, or a transformation by the combination of these transformations.

Further, the above object of the present invention is also effectively achieved by the construction that in the case of assuming that the registration for an image $I_a(\mathbf{x})$ and an image $I_b(\mathbf{x})$ is roughly conducted by transforming said image $I_a(\mathbf{x})$ with a certain transformation parameter **h,** the following expression holds,

$$I_b(\mathbf{x}) \approx I_a(\mathbf{W}(\mathbf{x};\mathbf{h})), \quad \mathbf{x} \in \mathrm{ROI}$$

where ROI represents said region of interest, in this case, an SSD (Sum of Squared Difference) between an image $I_a(\mathbf{W}(\mathbf{x};\mathbf{h}))$ and said image $I_b(\mathbf{x})$ for a patch that is centered around a pixel within said ROI (x), is defined as the following expression,

$$R(\mathbf{x},\mathbf{u}) = \sum_{\mathbf{x} \in \mathrm{Patch}} \left| I_a(\mathbf{W}(\mathbf{x};\mathbf{h})) - I_b(\mathbf{x}-\mathbf{u}) \right|^2$$

where, $\mathbf{u}=[u_1,u_2,1]^\top$ is a vector representing a translation between images and Patch represents said patch, when said SSD fulfills all of the following three conditions, the pixel value of said mask image corresponding to the pixel **x** within said ROI is set to 1, and in other cases, the pixel value of said mask image is set to 0, a condition 1: said condition 1 is that with respect to said SSD, the sub-pixel displacement about the translation is smaller than 0.5 pixel, a condition 2: said condition 2 is that the minimum value of said SSD is small enough, a condition 3: said condition 3 is that either of a two dimensional coefficient for the horizontal direction and the vertical direction when conducting the parabola fitting that is centered around the minimum value of said SSD, is bigger than the threshold.

Further, the above object of the present invention is also effectively achieved by the construction that said high-precision image registration consists of a first step registration that a mask image for tracking which represents pixels without the change between adjacent frames is generated and at the same time a motion parameter between adjacent frames is conducted, and a second step registration that a mask image for error correction which represents pixels within said image of interest that correspond to said reference image is generated between the image of interest transformed by said motion parameter estimated in said first step registration and said reference image and at the same time a motion parameter of said image of interest for said reference image is estimated again by using the generated mask image for error correction.

BRIEF DESCRIPTION OF THE DRAWINGS

FIG. 1 is an explanatory diagram illustrating the generation method of mask image in the present invention.

FIG. 2 is an explanatory diagram illustrating the first step registration in the present invention;

FIG. 3 is an explanatory diagram illustrating the second step registration in the present invention;

FIG. 4 shows the registration results of Experiment 1 by the image registration method of the present invention;

FIG. 5 shows diagrams which represent the change of area of mask images $Q_t(\mathbf{x}), M_t(\mathbf{x})$ of the present invention, the mean SSD after the first step registration and the second step registration of the present invention, and the mean SSD after registration by the conventional image registration method respectively in Experiment 1;

FIG. 6 is a diagram representing RMSE of the distance from the correct solution position by the estimated motion parameter in Experiment 1;

FIG. 7 shows the registration results of Experiment 2 by the image registration method of the present invention;

FIG. 8 shows diagrams which represent the change of area of mask images $Q_t(\mathbf{x}), M_t(\mathbf{x})$ of the present invention, the mean SSD after the first step registration and the second step registration of the present invention, and the mean SSD after registration by the conventional image registration method respectively in Experiment 2;

FIG. 9 shows the registration results of Experiment 3 by the image registration method of the present invention; and

FIG. 10 shows diagrams which represent the change of area of mask images $Q_t(\mathbf{x}), M_t(\mathbf{x})$ of the present invention, the mean SSD after the first step registration and the second step registration of the present invention, and the mean SSD after registration by the conventional image registration method respectively in Experiment 3.

THE BEST MODE FOR CARRYING OUT THE INVENTION

In general, the image registration method (hereinafter also simply referred to as "the motion estimation method") can be divided into the feature-based method and the region-based method.

The image registration method of the present invention, belongs to the region-based method and can be applied to the registration of the object having every geometry as well as planar geometry. According to the image registration method of the present invention, it is possible to conduct the high-precision image registration with robustness to illumination variation and occlusion.

That is to say, the image registration method of the present invention is a region-selection-based image registration method which uses mask images represent regions that can be approximated with high accuracy by the planar projective transformation model. Since the image registration method of the present invention conducts the image registration by two steps, hereinafter the image registration method of the present invention is also simply referred to as "the region selection two step registration method".

In the first step of the present invention, in order to realize the image registration with robustness to illumination variation and occlusion, the image registration based on motions between adjacent frames is conducted. In this case, a mask image (hereinafter this mask image is also simply referred to as "a mask image for tracking") is used simultaneously. Furthermore, in order to make the geometry of ROI uniformity, the motion estimation is conducted after having matched the frame of interest (hereinafter also simply referred to as "the image of interest") with the reference frame (hereinafter also simply referred to as "the reference image") by using the estimated motion parameter and having transformed the frame of interest.

Then, in the second step of the present invention, in order to compensate the accumulate operation error to be included in the motion parameter estimated in the first step, that is to say, in order to realize the high-precision image registration, the motion parameter is estimated again between the frame of interest transformed by the motion parameter estimated in the first step and the reference frame, at the same time, a mask image for the motion parameter that was estimated again (hereinafter this mask image is also simply referred to as "a mask image for error correction") is generated.

By conducting such a two-step registration, the image registration method of the present invention can be applied to the registration of the object having every geometry, and can realize the high-precision image registration with robustness to illumination variation and occlusion.

As described in background technique, a cause to fail in the image registration conducted by the use of the conventional region-based method, is a point using all pixel values within ROI equally.

The point aimed at of the present invention is not to be affected by variation of geometry and illumination in principle, if estimating the motion parameter by using only pixels that geometry and brightness for the reference image do not change within ROI (i.e. pixels of the mask image representing the region that can conduct the registration accurately by the planar projective transformation) without using all pixel values within ROI equally as conventional region-based method.

Furthermore, the present invention realizes the high-precision image registration by repeatedly and alternately conducting region selection and motion parameter estimation.

Practically, when conducting the registration of the input image for the reference image by using the image registration method of the present invention, the registration is conducted according to the following two steps.

The first step is a step that simultaneously estimates the mask image in time t ($Q_t(\mathbf{x})$) and the transformation parameter between adjacent frames that used the mask image $Q_t(\mathbf{x})$ ($\mathbf{h}_{t,t-1}$) by iterative computation.

The second step is a step that obtains the mask image in time t between the input image transformed by the planar projective transformation $\mathbf{W}(\mathbf{W}(\mathbf{x};\mathbf{h}_{t,t-1});\mathbf{h}_{t-1,0})$ and the reference image ($M_t(\mathbf{x})$), and estimates the transformation parameter of the input image for the reference image ($\mathbf{h}_{t,0}$) again by using the estimated $M_t(\mathbf{x})$.

As described above, in the image registration method of the present invention, two kinds of mask image, i.e. $Q_t(\mathbf{x})$ and $M_t(\mathbf{x})$ are utilized. The mask image $Q_t(\mathbf{x})$ represents pixels without the change between adjacent frames, and hereinafter is also referred to as "the mask image for tracking". Furthermore, the mask image $M_t(\mathbf{x})$ represents pixels within the input image that correspond to the reference image, and hereinafter is also referred to as "the mask image for error correction". In addition, not only the mask image for tracking but also the mask image for error correction is represented by a coordinate system on the reference image like ROI.

The image registration method of the present invention will be described below in detail with reference to the accompanying drawings.

(1) Generation method of mask image

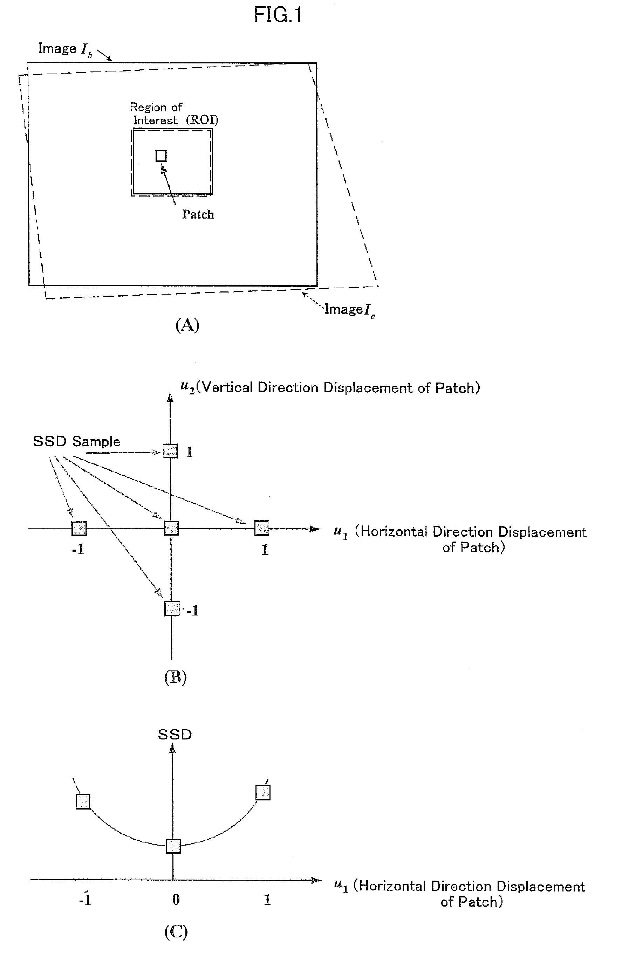

As shown in FIG. 1(A), we assume that the registration for an image $I_a(\mathbf{x})$ and an image $I_b(\mathbf{x})$ is roughly conducted by transforming the image $I_a(\mathbf{x})$ with a certain transformation parameter **h.**

[Expression 2]

$$I_b(\mathbf{x}) \approx I_a\big(\mathbf{W}(\mathbf{x};\mathbf{h})\big), \quad \mathbf{x} \in \mathrm{ROI}$$

In this case, an SSD (Sum of Squared Difference) between the image $I_a(\mathbf{W}(\mathbf{x};\mathbf{h}))$ and the image $I_b(\mathbf{x})$ for a patch that is centered around a pixel within ROI (**x**), is defined as the following Expression 3.

[Expression 3]

$$R(\mathbf{x},\mathbf{u}) = \sum_{\mathbf{x} \in \mathrm{Patch}} \left| I_a\big(\mathbf{W}(\mathbf{x};\mathbf{h})\big) - I_b(\mathbf{x} - \mathbf{u}) \right|^2$$

Where, $\mathbf{u}=[u_1,u_2,1]^\top$ is a vector representing the translation between images. Patch represents the patch.

When all of the following three conditions are fulfilled with respect to the SSD, the pixel value of the binary format mask image Q(**x**) for tracking corresponding to the position within ROI (**x**), i.e. the pixel within ROI (**x**) is set to 1, and in other cases, the pixel value of the binary format mask image $Q(x)$ for tracking is set to 0. Furthermore, the pixel value of the binary format mask image $M(\mathbf{x})$ for error correction is set like the binary format mask image $Q(\mathbf{x})$ for tracking, too.

Condition 1:

Condition 1 is that the sub-pixel displacement about the translation is smaller than 0.5 pixel (see FIG. 1(B) and FIG. 1(C)). FIG. 1(B) shows SSD samples and FIG. 1(C) shows the status when a quadratic curve parabola fitting is conducted for SSD samples. When representing Condition 1 by a mathematical expression, Condition 1 can be represented by the following Expression 4.

[Expression 4]

$$\begin{cases} R(\mathbf{x},[0,0,1]^\top) < R(\mathbf{x},[-1,0,1]^\top) \\ R(\mathbf{x},[0,0,1]^\top) < R(\mathbf{x},[1,0,1]^\top) \\ R(\mathbf{x},[0,0,1]^\top) < R(\mathbf{x},[0,-1,1]^\top) \\ R(\mathbf{x},[0,0,1]^\top) < R(\mathbf{x},[0,1,1]^\top) \end{cases}$$

Condition 2:

Condition 2 is that there is no mismatching. That is to say, Condition 2 is that the minimum value of the SSD ($R(\mathbf{x},[0,0,1]^\top)$) is small enough (see Non-Patent Document 21 and Non-Patent Document 22). When representing Condition 2 by a mathematical expression, Condition 2 can be represented by the following Expression 5.

[Expression 5]

$$R(\mathbf{x},[0,0,1]^\top) < 2S\sigma_n^2 \times \kappa_1$$

Where, S is the area of the patch, $\sigma_n^2$ is the variance of normalized white noise to be included in the image, and $\kappa_1 (\approx 1)$ is a tunable parameter. For reference's sake, in the experiments that are performed by the present invention as described hereinbelow, a patch where S is 9[pixel] x 9[pixel], is used. Furthermore, the parameter $\sigma_n^2$ is different by camera used in image capturing and the setting of gain and so on. For example, $\sigma_n^2$ is set to 3.5 when using a DragonFly camera (Point Grey Research Inc., a single-chip color VGA camera), and $\sigma_n^2$ is set to 4.5 when using VX2000 made in Company SONY.

Condition 3:

Condition 3 is that texture exists. That is to say, Condition 3 is that either of the two dimensional coefficient (The description of R() is omitted. When fitting $R(u)=au^2+bu+c$ in R(-1), R(0) and R(1), $a=(R(-1)+R(1))/2-R(0)$ $b=R(1)-R(-1)$ and $c=R(0)$ hold.) for the horizontal direction and the vertical direction when conducting the parabola fitting that is centered around the minimum value of the SSD, is bigger than the threshold. When representing Condition 3 by a mathematical expression, Condition 3 can be represented by the following Expression 6.

[Expression 6]

$$\begin{cases} (R(\mathbf{x},[-1,0,1]^\top)+R(\mathbf{x},[1,0,1]^\top))/2 \\ \qquad -R(\mathbf{x},[0,0,1]^\top) > \kappa_2 S \\ \qquad\qquad or \\ (R(\mathbf{x},[0,-1,1]^\top)+R(\mathbf{x},[0,1,1]^\top))/2 \\ \qquad -R(\mathbf{x},[0,0,1]^\top) > \kappa_2 S \end{cases}$$

Where, $\kappa_2 (\approx 14.0)$ is a tunable parameter determined by experiment.

(2) The first step registration

The aim of the first step registration (hereinafter also simply referred to as "the robust registration") is to continue the tracking of the object as possible for a long time.

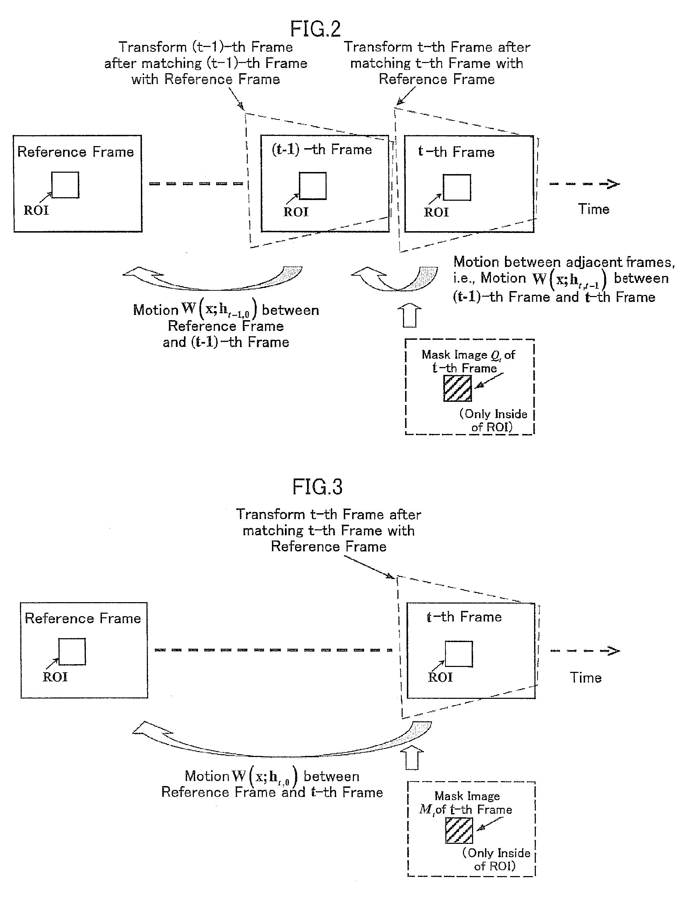

As shown in FIG. 2, in the first step registration, the transformation parameter for the input image in time t is obtained as the product of the planar projective transformation between adjacent frames ($\mathbf{W}(\mathbf{x};\mathbf{h}_{t,t-1})$) and the planar projective transformation for the reference image that is already obtained in previous time (t-1).

Since there are few changes of image between adjacent frames, there is not the big failure in the first step registration. For this reason, even if the brightness and geometry of the object gradually change for the reference image, it is possible to conduct a robust registration.

In short, in the first step registration, the motion parameter $\mathbf{h}_{t,t-1}$ and the mask image for tracking $Q_t(\mathbf{x})$ that minimize an objective function represented by the following Expression 7, are obtained.

$$[\text{Expression 7}]$$
$$E_Q(\mathbf{h}_{t,t-1}) = \sum_{\mathbf{x} \in \text{ROI}} Q_t(\mathbf{x}) \, | \, I_t(\mathbf{W}(\mathbf{W}(\mathbf{x};\mathbf{h}_{t,t-1});\mathbf{h}_{t-1,0})) - I_{t-1}(\mathbf{W}(\mathbf{x};\mathbf{h}_{t-1,0})) \, |^2$$

Where, $\mathbf{h}_{t-1,0}$ is a motion parameter that is already obtained for previous frame, i.e. a motion parameter of (t-1)-th frame (the input image of time (t-1)) for the reference frame (the reference image). $\mathbf{h}_{t,t-1}$ is a motion parameter between adjacent frames, i.e. a motion parameter between t-th frame (the input image of time t) and (t-1)-th frame (the input image of time (t-1)). $I_t(\mathbf{x})$ and $I_{t-1}(\mathbf{x})$ are the input images of time t and time (t-1) respectively.

Since the mask image for tracking $Q_t(\mathbf{x})$ is defined on the reference image, the motion parameter between adjacent frames is obtained after having matched the input image with the reference image by using the motion parameter that is already obtained and having transformed the input image.

Specifically, the motion parameter between adjacent frames and the mask image for tracking are repeatedly and alternately obtained by procedures from Step 1 to Step 4.

Step 1:

An index i that represents the number of times of iteration is initialized. That is to say, i is set to 0 (i=0). A mask image for tracking that is already obtained in time (t-1) ($Q_{t-1}(\mathbf{x})$), is set as an initial mask image of time $t$ ($Q_t^{<i>}(\mathbf{x})$).

Step 2:

A motion parameter between adjacent frames that minimizes Expression 7 ($\mathbf{h}_{t,t-1}^{<i>}$) is obtained by using the mask image for tracking ($Q_t^{<i>}(\mathbf{x})$).

Step 3:

First, an image that planar projective transformation is conducted ($I_t(\mathbf{W}(\mathbf{W}(\mathbf{x};\mathbf{h}_{t,t-1});\mathbf{h}_{t-1,0}))$) is generated by using the motion parameter between adjacent frames that is obtained in Step 2 ($\mathbf{h}_{t,t-1}^{<i>}$). Second, a mask image for tracking ($Q_t^{<i+1>}(\mathbf{x})$) is generated by using the generation method of mask image as described in (1) between the generated image ($I_t(\mathbf{W}(\mathbf{W}(\mathbf{x};\mathbf{h}_{t,t-1});\mathbf{h}_{t-1,0}))$) and an image $I_{t-1}(\mathbf{W}(\mathbf{x};\mathbf{h}_{t-1,0}))$.

Step 4:

It is judged whether the change of the motion parameter between adjacent frames became less than or equal to a certain value. When the change of the motion parameter between adjacent frames became less than or equal to a certain value, it is judged that the motion parameter between adjacent frames converged, $\mathbf{h}_{t,t-1}^{<i>}$ is output as the motion parameter between adjacent frames, and the processing of the first step registration is finished. On the other hand, when the change of the motion parameter between adjacent frames does not become less than or equal to a certain value, i.e. when $\| \mathbf{h}_{t,t-1}^{<i>} - \mathbf{h}_{t,t-1}^{<i-1>} \| \geq T_h$ ($T_h$ represents a certain value that is mentioned in Step 4) holds, it is judged that the motion parameter between adjacent frames did not converge, the processing of the first step registration returns to Step 2 after setting i+1 as i (i←i+1).

(3) The second step registration

The aim of the second step registration (hereinafter also simply referred to as "the accumulate operation error correction registration") is to correct the registration error that occurred in the first step registration.
As shown in FIG. 3, in the second step registration, a mask image for error correction in time t ($M_t(\mathbf{x})$) is obtained between the reference image and the image that is obtained in the first step registration ($I_t(\mathbf{W}(\mathbf{W}(\mathbf{x};\mathbf{h}_{t,t-1});\mathbf{h}_{t-1,0}))$) i. e. the input image of time t that is transformed by the planar projective transformation ($\mathbf{W}(\mathbf{W}(\mathbf{x};\mathbf{h}_{t,t-1});\mathbf{h}_{t-1,0})$), and the registration error is corrected by estimating the motion parameter of the input image in time t for the reference image ($\mathbf{h}_{t,0}$) with the obtained $M_t(\mathbf{x})$ again.
The mask image for tracking ($Q_t(\mathbf{x})$) represents pixels that the registration between adjacent frames can use. Since the change between adjacent frames is small generally, the area of the mask image for tracking ($Q_t(\mathbf{x})$) does not become so small. On the other hand, when the input image gradually changes for the reference image, the area of the mask image for error correction ($M_t(\mathbf{x})$) gradually become small.
Since the region of the mask image for error correction ($M_t(\mathbf{x})$) is used in the second step registration, in order to obtain stable results, it is necessary that the region of the mask image for error correction ($M_t(\mathbf{x})$) is bigger than a certain degree of region. Therefore, when the region of the mask image for error correction ($M_t(\mathbf{x})$) is small, i.e. when the area of the mask image for error correction ($M_t(\mathbf{x})$) is under a predetermined threshold, the motion parameter obtained in the first step registration, is just used without conducting the second step registration.
In short, in the second step registration, the motion parameter $\mathbf{h}_{t,0}$ and the mask image for error correction $M_t(\mathbf{x})$ that minimize an objective function represented by the following Expression 8, are obtained.

$$[\text{Expression } 8]$$
$$E_M(\mathbf{h}_{t,0}) = \sum_{\mathbf{x} \in \text{ROI}} M_t(\mathbf{x}) \, | \, I_t(\mathbf{W}(\mathbf{x};\mathbf{h}_{t,0})) - I_0(\mathbf{x}) \, |^2$$

Where, the planar projective transformation $\mathbf{W}(\mathbf{W}(\mathbf{x};\mathbf{h}_{t,t-1});\mathbf{h}_{t-1,0})$ that is obtained in the first step registration, is used as an initial value $\mathbf{W}(\mathbf{x};\mathbf{h}_{t,0}^{<0>})$ of a planar projective transformation $\mathbf{W}(\mathbf{x};\mathbf{h}_{t,0})$.
Specifically, the motion parameter $\mathbf{h}_{t,0}$ (i.e. the transformation parameter of the input image of time t for the reference image) and the mask image for error correction are obtained by procedures from Step 5 to Step 9. The second step registration differs from the first step registration and does not conduct procedures from Step 5 to Step 9 repeatedly.

Step 5:

The planar projective transformation $\mathbf{W}(\mathbf{W}(\mathbf{x};\mathbf{h}_{t,t-1});\mathbf{h}_{t-1,0})$ that is obtained in the first step registration, is set as the initial value $\mathbf{W}(\mathbf{x};\mathbf{h}_{t,0}^{<0>})$ of the planar projective transformation $\mathbf{W}(\mathbf{x};\mathbf{h}_{t,0})$.

Step 6:

A mask image for error correction $(M_t^{<1>}(\mathbf{x}))$ is generated by using the generation method of mask image as described in (1) between the input image of time t that is transformed by the planar projective transformation $(\mathbf{W}(\mathbf{x};\mathbf{h}_{t,0}^{<0>}))$, i.e. the image $I_t(\mathbf{W}(\mathbf{x};\mathbf{h}_{t,0}^{<0>}))$ and the reference image $I_0(\mathbf{x})$.

Step 7:

It is judged whether the area of the mask image $M_t^{<1>}(\mathbf{x})$ for error correction that is generated in Step 6 is under a predetermined threshold. When the area of the mask image $M_t^{<1>}(\mathbf{x})$ for error correction is under a predetermined threshold, $\mathbf{h}_{t,0}^{<0>}$ is output as the motion parameter, and the processing of the second step registration is finished. Hereby, all the registration processing for the input image of time t is finished. Here, it is necessary to adjust the predetermined threshold by characteristics of motions of the image sequence, the centroid position of the mask region within ROI, the distribution of the mask region, and so on. Furthermore, in the registration experiments performed by the present invention as described below, the predetermined threshold is set to 20[pixel] x 20[pixel].

Step 8:

On the other hand, when the area of the mask image $M_t^{<1>}(\mathbf{x})$ for error correction is more than or equal to predetermined threshold, $\mathbf{h}_{t,0}^{<1>}$ that minimizes Expression 8 is obtained by using the mask image $M_t^{<1>}(\mathbf{x})$ for error correction generated in Step 6, the obtained $\mathbf{h}_{t,0}^{<1>}$ is output as the motion parameter, and the processing of the second step registration is finished. Hereby, all the registration processing for the input image of time t is finished.

Step 9:

Finally, a mask image for error correction $\left(M_t^{<2>}(\mathbf{x})\right)$ is generated by using the generation method of mask image as described in (1) between the image $I_t\left(\mathbf{W}(\mathbf{x};\mathbf{h}_{t,0}^{<1>})\right)$ and the reference image $I_0(\mathbf{x})$ for confirmation.

(4) Initial value estimation

In the registration experiments performed by the present invention as described below, in order to estimate the initial value of the motion parameter between adjacent frames that is obtained in the first step registration, the hierarchical search method that is disclosed in Non-Patent Document 23 is used. The hierarchies are limited so that the area of ROI within the reduction image did not become smaller than 25[pixel] x 25[pixel].

(5) Speeding up of iterative computation

In the image registration method of the present invention, firstly, in the first step registration, it is necessary to conduct motion parameter estimation that uses the gradient method used iterative computation (the number of times of iteration is set to ig) and conduct only iterative computation (the number of times of iteration is set to $i_r$) for simultaneously estimating with the mask image $Q_t(\mathbf{x})$ for tracking. And then, in the second step registration, it is necessary to only conduct the gradient method once (the number of times of iteration is also set to $i_g$). In early gradient method, it was necessary to compute the Hessian matrix of the input image repeatedly. For this reason, in the present invention, it is necessary to obtain the Hessian matrix (ig x $i_r$ + ig) times for each frame image. Consequently, in comparison with the normal gradient method that does not conduct the region selection, the amount of computation in the present invention increases greatly.

Incidentally, instead of computing the Hessian matrix of the input image repeatedly, a speeding up method that the Hessian matrix of the input image is only computed once and is used (see Non-Patent Document 15), is proposed. In the present invention, since it is possible to require only one computation of the Hessian matrix for each frame image in the first step registration and preliminarily compute through the preprocessing in the second registration by using the speeding up method disclosed in Non-Patent Document 15, therefore it is possible to speed up the computation considerably.

(6) The results of registration experiments performed by the present invention

We performed a few registration experiments using real images by the image registration method of the present invention (hereinafter also simply referred to as "the present invention"), and confirmed the validity of the present invention.

That is to say, through the registration experiments described below, the originally superior effects of the present invention, i.e. (a) it is possible to apply to the registration of the object having every geometry as well as planar geometry, (b) having robustness to illumination variation and occlusion, (c) it is possible to conduct the high-precision image registration, are confirmed.

In the registration experiments described below, a stationary single-chip color VGA camera DragonFly (Point Grey Research inc.) running at 30 FPS is used. In the registration, the transformed luminance component is used after the demosaicing processing. Experiment 1 (an experiment for comparing the present invention and the conventional method)

Firstly, a registration experiment that compares the present invention with the conventional image registration method (hereinafter also simply referred to as "the conventional method"), is performed.

In Experiment 1, an image sequence which consists of 300 frames, is used. The size of ROI is 200[pixel] x 200 [pixel]. Further, the object for tracking is an aerial photograph poster stuck on a fixed plane. In order to make illumination variation and occlusion, a hand is moved on the poster. The shade of the hand corresponds to the illumination variation and the hand itself becomes the occlusion.

In Experiment 1, since the object having planar geometry (the aerial photograph poster) that was fixed without moving, is captured in the state that the camera is fixed, so the position of the object does not change, therefore the motion parameter to become the correct solution, of course becomes a unit matrix.

Through Experiment 1, we confirmed that when there are illumination variation and occlusion, even in the situation that the registration fails by the conventional method, it is possible to conduct the high-precision image registration without failing by using the present invention.

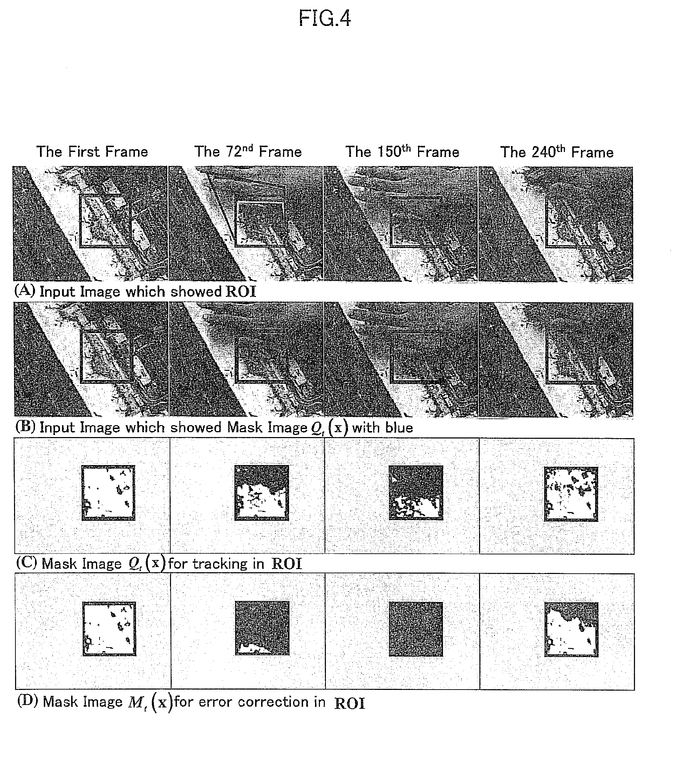

FIG. 4 shows the registration results of Experiment 1. As shown in FIG. 4, the registration results for some images (i.e. the first frame, the 72nd frame, the 150th frame, and the 240th frame) of the image sequence used in Experiment 1 are shown.

Specifically, FIG. 4 (A) shows the tracking result of ROI that is set on the reference image (the first frame which is a beginning frame). Then FIG. 4 (B) shows the images that are obtained by planar projective transformed the whole input image with the estimated motion parameter for ROI. If the motion parameter is estimated precisely, ROI stands still and it should be displayed. Furthermore, in FIG. 4(B), the mask image for tracking is shown with light blue.

FIG. 4(C) shows the mask image $Q_t(\mathbf{x})$ for tracking in ROI. FIG. 4(D) shows the mask image $M_t(\mathbf{x})$ for error correction in ROI. Through FIG. 4(C) and FIG. 4(D), we understood that when there are the illumination variation by the shade of the hand and the occlusion by the hand, although the area of the mask image $M_t(\mathbf{x})$ for error correction for the reference image becomes small, but the mask image $Q_t(\mathbf{x})$ for tracking is not affected like that, so it is possible to continuously conduct the tracking. On the other hand, when the illumination variation by the shade of the hand and the occlusion by the hand are removed, the area of the mask image $M_t(\mathbf{x})$ for error correction for the reference image also increases.

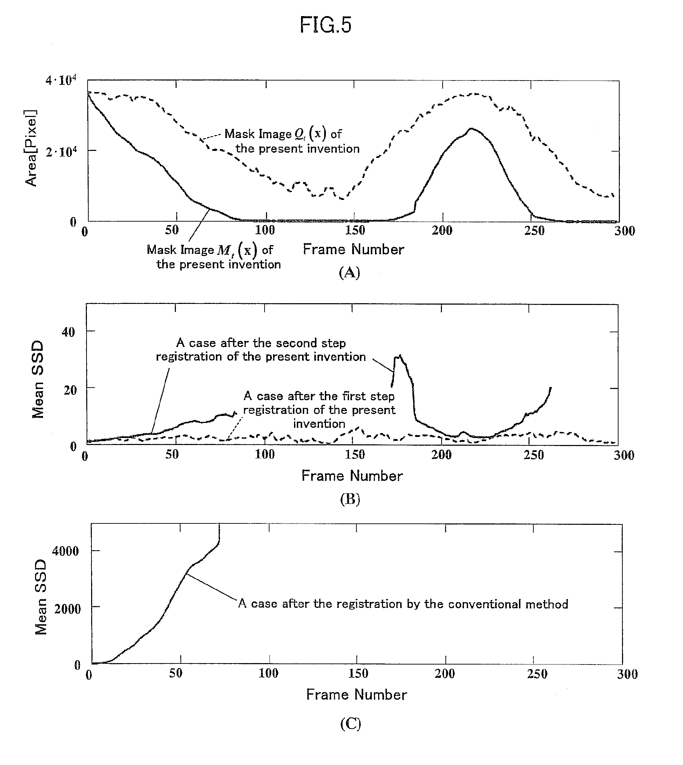

FIG. 5 (A) shows the change of area of the mask image $Q_t(\mathbf{x})$ for tracking and the mask image $M_t(\mathbf{x})$ for error correction that are used in Experiment 1. Through FIG. 5(A), we understood that although the area of the mask image $Q_t(\mathbf{x})$ for tracking that is represented by a dotted line decreases during times that there is the occlusion by the hand, through all frames, enough areas are secured to conduct tracking.

FIG. 5 (B) shows the mean SSD after the first step registration that is represented by a dotted line and the mean SSD after the second step registration that is represented by a solid line in Experiment 1. The mean SSD to mention here is a value that is obtained by dividing an SSD between images when it is judged that iteration by gradient method converged (a minimum SSD) by the area of the mask image.

Through FIG. 5(B), we understood that in the first step registration, the mean SSD always becomes the low value, and the stable high-precision image registration is conducted. On the other hand, we also understood that in the second step registration, the mean SSD also increases as the input image changes for the reference image. In FIG. 5 (B), an interval where the solid line representing the mean SSD after the second step registration breaks, represents the frames that did not conduct the second step registration because the area of the mask image $M_t(\mathbf{x})$ for error correction that is represented by a solid line in FIG. 5(A).

FIG. 5(C) shows the results obtained by using the conventional registration method in Experiment 1, i.e. shows the mean SSD after the registration conducted by the hierarchical search method and the gradient method that used all pixels within ROI. Through FIG. 5(C), we understood that in the case of using the conventional registration method that the whole ROI is used and the region selection is not conducted, when there are illumination variation within ROI and occlusion, the mean SSD becomes bigger simply and eventually the registration failed. The value of the mean SSD in FIG. 5(C) is a value that is two digits bigger than the value of the mean SSD when the mask image of the present invention of FIG. 5(B) is used. It shows not only the possibility that the registration becomes unstable but also the inaccuracy, that the mean SSD of FIG. 5(C) is very big.

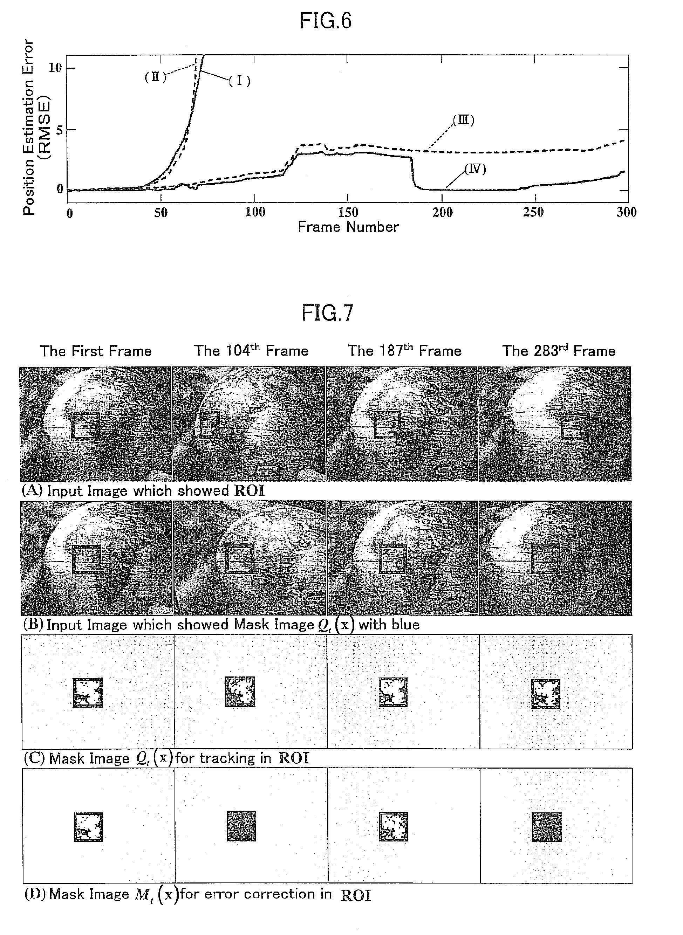

In Experiment 1, since the motion is a known thing preliminarily, that is to say, since the motion parameter to become the correct solution is a unit matrix, the motion estimation accuracy is evaluated by the position error that occurred by the estimated motion parameter (see Non-Patent Document 15). FIG. 6 shows RMSE (Root Mean Square Error) of the distance from the correct solution position by the motion parameter that is estimated by using the positions of 200 x 200 set within ROI in Experiment 1.

Specifically, FIG. 6 compared a registration by the region selection two step registration method of the present invention that is represented by a solid line indicated by (IV) with a direct registration with the input image and the reference image by the conventional registration method (i.e. the hierarchical search method and the gradient method that used all pixels within ROI) that is represented by a solid line indicated by (I), a registration which is accumulate operation of motions between adjacent frames by the conventional registration method (i.e. the hierarchical search method and the gradient method that used all pixels within ROI) that is represented by a solid line indicated by (II), a registration only by the first step registration of the present invention that is represented by a solid line indicated by (III).

Through FIG. 6, we understood that the conventional registration method (I) and (II) fail in the tracking in the vicinity of the 72nd frame and on the other hand the first step registration of the present invention (III) and the region selection two step registration method of the present invention (IV) succeed in the tracking to a final frame. Furthermore, we also understood that although in the case of using the first step registration method of the present invention (III) the position error becomes bigger over time, in the case of using the region selection two step registration method of the present invention (IV) the high-precision tracking is resumed from the vicinity of the 186th frame that the second step registration is reopened.

Experiment 2 (a robust tracking experiment of an object having nonplanar geometry)

In Experiment 2, the tracking object is a globe whose diameter is about 14cm, and an image sequence which consists of 300 frames that captured the globe turned slowly by hand by right and left, is used. In Experiment 2 the size of ROI is 100 [pixel] x 100 [pixel].

Through Experiment 2, we confirmed that even if the tracking object has nonplanar geometry, the robust tracking is possible by the region selection two step registration method of the present invention.

FIG. 7 shows the registration results of Experiment 2. As shown in FIG. 7, the registration results for some images (i.e. the first frame, the 104th frame, the 187th frame, and the 283rd frame) of the image sequence used in Experiment 2 are shown.

Specifically, FIG. 7 (A) shows the tracking result of ROI that is set on the reference image (the first frame which is a beginning frame). Then FIG. 7 (B) shows the images that are obtained by planar projective transformed the whole input image with the estimated motion parameter for ROI. Furthermore, in FIG. 7(B), the mask image for tracking is shown with light blue. FIG. 7(C) shows the mask image $Q_t(\mathbf{x})$ for tracking in ROI. FIG. 7(D) shows the mask image $M_t(\mathbf{x})$ for error correction in ROI.

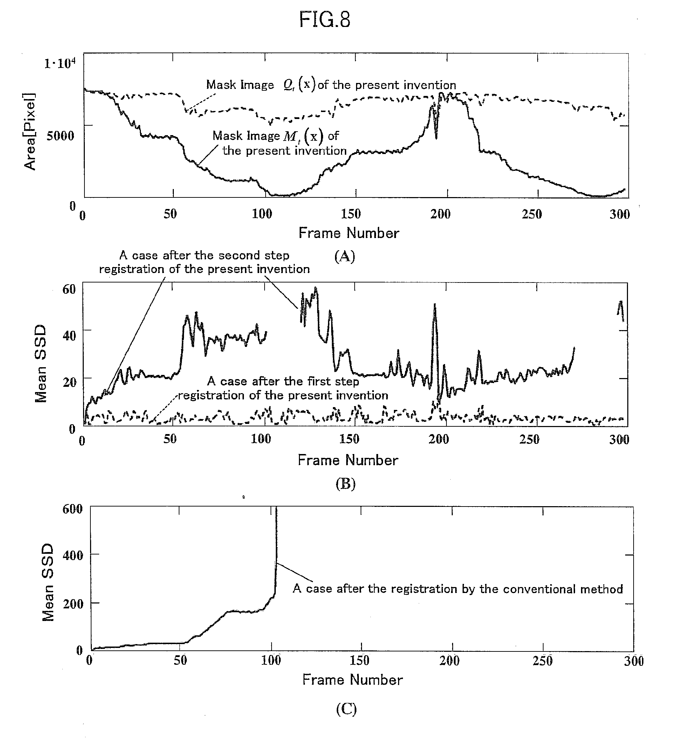

FIG. 8 (A) shows the change of area of the mask image $Q_t(\mathbf{x})$ for tracking and the mask image $M_t(\mathbf{x})$ for error correction that are used in Experiment 2. FIG. 8 (B) shows the mean SSD after the first step registration that is represented by a dotted line and the mean SSD after the second step registration that is represented by a solid line in Experiment 2. Furthermore, FIG. 8(C) shows the results obtained by using the conventional registration method in Experiment 2, i.e. shows the mean SSD after the registration conducted by the hierarchical search method and the gradient method that used all pixels within ROI.

Through FIG. 8, we understood that since the area of the mask image $Q_t(\mathbf{x})$ for tracking of the present invention is kept big (see the dotted line of FIG. 8(A)) and the mean SSD is gone at a small value (see the dotted line of FIG. 8 (B)) by comparing the conventional registration method that used the whole ROI (see FIG. 8(C)), in spite of the tracking object having planar geometry, a good tracking can be conducted by using the present invention.

Furthermore, through FIG. 8, we also understood that although there is a period in which the mask image $Q_t(\mathbf{x})$ for error correction of the present invention disappeared once and the second step registration is not conducted due to the illumination variation of ROI (see the solid line of FIG. 8(B)), when a rotation angle of the globe is restored, the mask image $Q_t(\mathbf{x})$ for error correction resurges and the accumulate operation error is corrected by the second step registration.

Experiment 3 (a robust tracking experiment of a face)

In Experiment 3, the tracking object is a person's face that is captured in the room, and since the direction of the face is changed under the fixed room illumination, the illumination variation exists. Furthermore, in Experiment 3, not only the face is a nonplane but also the geometry slightly changes. In Experiment 3, an image sequence which consists of 600 frames that captured the face is used, and the size of ROI is 90[pixel] x 100[pixel].

Through Experiment 3, we confirmed that even if the tracking object is an object which is not usually used by the conventional region-based registration method, the robust tracking is possible by the region selection two step registration method of the present invention.

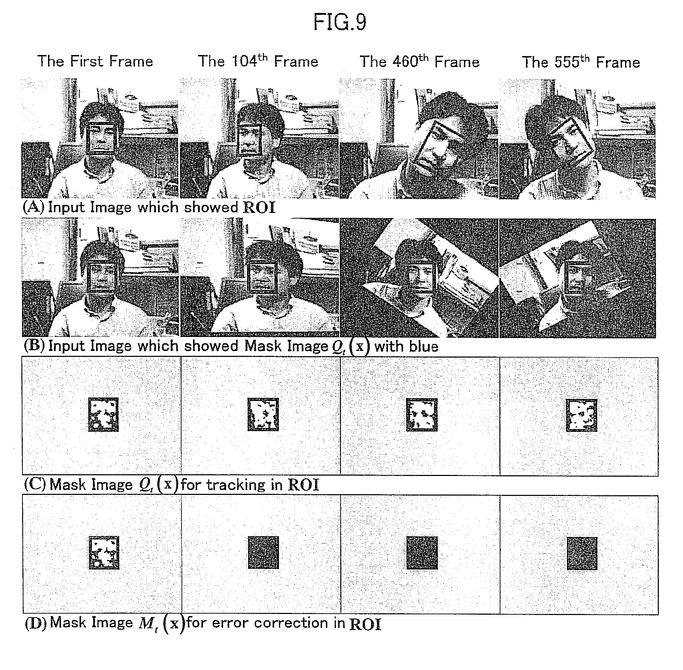

FIG. 9 shows the registration results of Experiment 3. As shown in FIG. 9, the registration results for some images (i.e. the first frame, the 104th frame, the 460th frame, and the 555th frame) of the image sequence used in Experiment 3 are shown.

Specifically, FIG. 9 (A) shows the tracking result of ROI that is set on the reference image (the first frame which is a beginning frame). Then FIG. 9 (B) shows the images that are obtained by planar projective transformed the whole input image with the estimated motion parameter for ROI. Furthermore, in FIG. 9(B), the mask image for tracking is shown with light blue. FIG. 9(C) shows the mask image $Q_t(\mathbf{x})$ for tracking in ROI. FIG. 9(D) shows the mask image $M_t(\mathbf{x})$ for error correction in ROI.

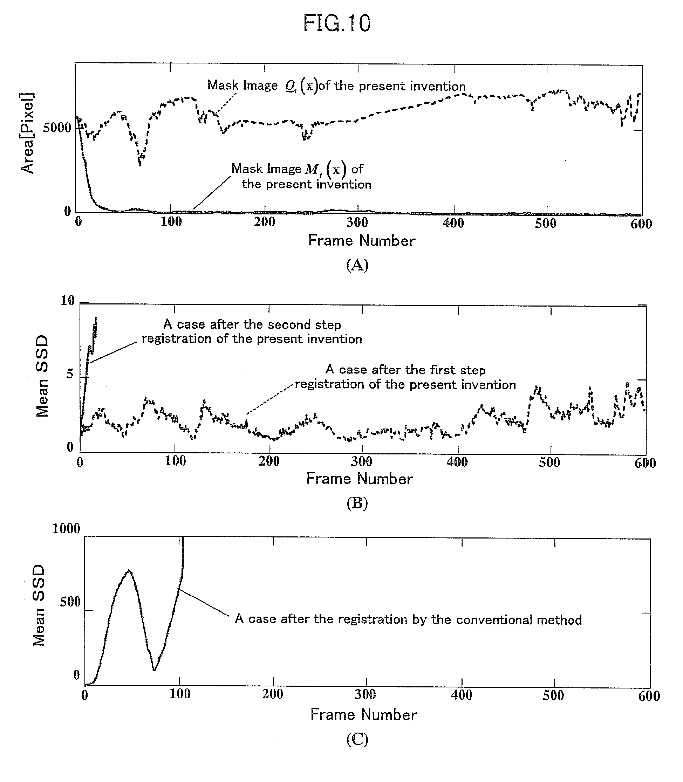

FIG. 10 (A) shows the change of area of the mask image $Q_t(\mathbf{x})$ for tracking and the mask image $M_t(\mathbf{x})$ for error correction that are used in Experiment 3. FIG. 10 (B) shows the mean SSD after the first step registration that is represented by a dotted line and the mean SSD after the second step registration that is represented by a solid line in Experiment 3. Furthermore, FIG. 10(C) shows the results obtained by using the conventional registration method in Experiment 3, i.e. shows the mean SSD after the registration conducted by the hierarchical search method and the gradient method that used all pixels within ROI.

Through FIG. 10, we understood that since in the image sequence used in Experiment 3 there are many changes of the input image for the reference image, the second step registration of the present invention is conducted only to the initial period, i.e. the 25th frame.

However through FIG. 10, we understood that since the area of the mask image $Q_t(\mathbf{x})$ for tracking of the present invention is kept big (see the dotted line of FIG. 10(A)) and the mean SSD is gone at a small value (see the dotted line of FIG. 10(B)) by comparing the conventional registration method that used the whole ROI (see FIG. 10(C)), even if the tracking object is an object such as a person's face that is a nonplane and also geometry changes, a good tracking can be continued by using the present invention even if the correction of the accumulate operation error is not performed by the second step registration.

In addition, in the embodiment of the present invention described above, when conducting the image registration, the transformation of the image is performed based on the planar projective transformation. However, the planar projective transformation to mention in the present invention, includes not only the planar projective transformation but also the affine transformation, the scale transformation, the rotation transformation, the parallel transformation as particular cases of the planar projective transformation, and the transformation by the combination of these transformations.

INDUSTRIAL APPLICABILITY

The image registration method of the present invention, is a region-selection-based image registration method that uses the mask image representing the region which can be approximated with a high degree of accuracy by the planar projective transformation model.

The image registration method of the present invention is characterized in that the mask image representing the region where the registration is performed precisely by the planar projective transformation, is utilized when estimating the transformation parameter (the motion parameter).

Actually, in the case of conducting the registration by using the image registration method of the present invention, it is the big feature to perform the first step registration that the mask image for tracking is generated and at the same time the registration based on the motion between adjacent frames is conducted to realize the registration with robustness to illumination variation and occlusion, and the second step registration that the mask image for error correction is generated between the frame of interest (the image of interest) transformed by the motion parameter estimated in the first step registration and the reference frame (the reference image) and at the same time the motion parameter of the image of interest for the reference image is estimated again by using the generated mask image for error correction to compensate the accumulate operation error to be included in the motion parameter estimated in the first step registration, i.e. to realize the high-precision registration.

According to the image registration method of the present invention having the above feature, since the registration between the image of interest and the reference image is conducted by performing such a two step registration, it is possible to obtain the originally superior effects of the present invention to be able to realize the high-precision image registration with robustness to illumination variation and occlusion for the object having every geometry as well as planar geometry.

<The List of References>

Non-Patent Document 1:
"A Survey of Image Registration Techniques" written by L. G. Brown, ACM Computing Surveys, December, 1992, vol.24, No.4, p.325-376

Non-Patent Document 2:
"FlusserImage Registration Methods: A Survey" written by B. Zitova and J. Flusser, Image and Vision Computing, October, 2003, vol.21, No.11, p.977-1000

Non-Patent Document 3:
"Eigen-Tracking: Robust Matching and Tracking of Articulated Objects using a View-Based Representation" written M. Black and A. Jepson, International Journal of Computer Vision, 1998, vol.26, No.1, p.63-84

Non-Patent Document 4:
"Efficient Region Tracking with Parametric Models of Geometry and Illumination" written by G. D. Hager and P. N. Belhumeur, IEEE Trans. on Pattern Analysis and Machine Intelligence, October, 1998, vol.20, No.10, p.1025-1039

Non-Patent Document 5:
"Efficient Image Alignment with Outlier Rejection" written by T. Ishikawa, I. Matthews and S. Baker, Tech. Report CMU-RI-TR-02-27, Robotics Institute, Carnegie Mellon University, October, 2002

Non-Patent Document 6:
"Real Time Robust Template Matching" written by F. Jurie and M. Dhome, September, 2002, p.123-132

Non-Patent Document 7:
"Q-Warping: Direct Computation of Quadratic Reference Surfaces" written by A. Shashua and Y. Wexler, IEEE Trans. on Pattern Analysis and Machine Intelligence, August, 2001, vol.23, No.8, p.920-925

Non-Patent Document 8:
"Active Appearance Models" written by T. F. Cootes, J. Edwards and C. J. Taylor, IEEE Trans. on Pattern Analysis and Machine Intelligence, June, 2001, vol.23, No.6, p.681-685

Non-Patent Document 9:
"Motion Segmentation and Qualitative Dynamic Scene Analysis from an Image Sequence" written by P. Bouthemy and E. Francois, International Journal of Computer Vision, 1993, vol.10, No.2, p.157-182

Non-Patent Document 10:
"An Iterative Motion Estimation-Segmentation Method using Watershed Segments" written by I. Patras, E. A. Hendriks and R. L. Lagendijk, In Proc. of IEEE International Conference on Image Processing, October, 1998, vol.2, p. 642-646

Non-Patent Document 11:
"Simultaneous Motion Estimation and Segmentation" written by M. M. Chang, A. M. Tekalp and M. I. Sezan, IEEE Trans. on Image Processing, September, 1997, vol.6, No.9, p.1326-1333

Non-Patent Document 12:
"Computing Occluding and Transparent Motions" written by M. Irani, B. Rousso and S. Peleg, International Journal of Computer Vision, February, 1994, vol.12, No.1

Non-Patent Document 13:
"Two Step Algorithm for Point Feature Tracking with Robustness to Occlusions" written by T. FUKAO and T. KANADE, IPSJSIG Notes. CVIM, November, 2003, CVIM-141, p.111-118

Non-Patent Document 14:
"Motion Recognition Using Nonparametric Image Motion Models Estimated from Temporal and Multiscale Co-Occurrence Statistics" written by R. Fablet and P. Bouthemy, IEEE Trans. on Pattern Analysis and Machine Intelligence, December, 2003, vol.25. No.12

Non-Patent Document 15:
"Lucas-Kanade 20 Years On: A Unifying Framework" written by S. Baker and I. Matthews, International Journal of Computer Vision, March, 2004, vol.56, No.3, p.221-255

Non-Patent Document 16:
"Projective Registration with Difference Decomposition" written by M. Gleicher, Proc. of IEEE International Conference on Computer Vision and Pattern Recognition, San Juan, Puerto Rico, June, 1997, p.331-337

Non-Patent Document 17:
"An Iterative Image Registration Technique with an Application to Stereo Vision" written by B. Lucas and T. Kanade, Proc. of International Joint Conference on Artificial Intelligence, Vancouver, Canada, April, 1981, p.674-679

Non-Patent Document 18:
"Construction of Panoramic Image Mosaics with Global and Local Alignment" written by H. Y. Shum and R. Szeliski, International Journal of Computer Vision, July, 2002, vol.48, No.2, p.151-152

Non-Patent Document 19:
"Multi-Parameter Simultaneous Estimation on Area-Based Matching" written by M. Shimizu and M. Okutomi, Internationalof Computer Vision, 2006

Non-Patent Document 20:
"A Fast Algorithm for Hyperplane-Intersection Method on Image Registration" written by S.K. Chang, M. Shimizu and M. Okutomi , The IEICE transactions on information and systems, February, 2006, vol.J89-D, No.2, p.332-343

Non-Patent Document 21:
"A Stereo Matching Algorithm with an Adaptive Window: Theory and Experiment" written by T. Kanade and M. Okutomi, IEEE Trans. on Pattern Analysis and Machine Intelligence, September, 1994, vol. 16, No.9, p.920-932

Non-Patent Document 22:
"A Multiple Baseline Stereo" written by M. Okutomi and T. Kanade), IEEE Trans. on Pattern Analysis and Machine Intelligence, April, 1993, vol.15, No.4, p.353-363

Non-Patent Document 23:
"Hierarchical Model-Based Motion Estimation" written by J. R. Bergen, P. Anandan, K. J. Hanna and R. Hingorani, In Proc. of European Conference on Computer Vision, Santa Margherita Liguere,1992, p.237-252

**Claims**

1. An image registration method for conducting a high-precision image registration between a reference image in an image sequence capturing an object and an image of interest in said image sequence,
said method **characterized in that** a predetermined region on said reference image is set as a region of interest, when conducting said high-precision image registration, a motion parameter is estimated based on pixels of a mask image representing a region where the registration is performed precisely by a predetermined transformation within said region of interest that is set.

2. The image registration method according to Claim 1, wherein said mask image is generated by utilizing the similarity evaluation between images.

3. The image registration method according to Claim 2, wherein said predetermined transformation is a planar projective transformation, an affine transformation, a scale transformation, a rotation transformation, a parallel transformation, or a transformation by the combination of these transformations.

4. The image registration method according to Claim 3, wherein in the case of assuming that the registration for an image $I_a(\mathbf{x})$ and an image $I_b(\mathbf{x})$ is roughly conducted by transforming said image $I_a(\mathbf{x})$ with a certain transformation parameter h, the following expression holds,

$$I_b(\mathbf{x}) \approx I_a(\mathrm{W}(\mathbf{x};\mathbf{h})), \quad \mathbf{x} \in \mathrm{ROI}$$

where ROI represents said region of interest,

in this case, an SSD (Sum of Squared Difference) between an image $I_a(\mathbf{W}(\mathbf{x};\mathbf{h}))$ and said image $I_b(\mathbf{x})$ for a patch that is centered around a pixel within said ROI (x), is defined as the following expression,

$$R(\mathbf{x},\mathbf{u}) = \sum_{\mathbf{x}\in\mathrm{Patch}} \left| I_a\big(\mathbf{W}\big(\mathbf{x};\mathbf{h}\big)\big) - I_b\big(\mathbf{x}-\mathbf{u}\big) \right|^2$$

where, $\mathbf{u}=[u_1,u_2,1]^\top$ is a vector representing a translation between images and Patch represents said patch, when said SSD fulfills all of the following three conditions, the pixel value of said mask image corresponding to the pixel x within said ROI is set to 1, and in other cases, the pixel value of said mask image is set to 0, a condition 1:

said condition 1 is that with respect to said SSD, the sub-pixel displacement about the translation is smaller than 0.5 pixel,

a condition 2:

said condition 2 is that the minimum value of said SSD is small enough,

a condition 3:

said condition 3 is that either of a two dimensional coefficient for the horizontal direction and the vertical direction when conducting the parabola fitting that is centered around the minimum value of said SSD, is bigger than the threshold.

5. The image registration method according to Claim 4, wherein said high-precision image registration consists of a first step registration that a mask image for tracking which represents pixels without the change between adjacent frames is generated and at the same time a motion parameter between adjacent frames is conducted, and a second step registration that a mask image for error correction which represents pixels within said image of interest that correspond to said reference image is generated between the image of interest transformed by said motion parameter estimated in said first step registration and said reference image and at the same time a motion parameter of said image of interest for said reference image is estimated again by using the generated mask image for error correction.

# FIG.1

Image $I_b$

Region of
Interest (ROI)

Patch

Image $I_a$

(A)

$u_2$(Vertical Direction Displacement of Patch)

SSD Sample

1

-1

1

$u_1$ (Horizontal Direction Displacement
of Patch)

-1

(B)

SSD

-1        0        1

$u_1$ (Horizontal Direction Displacement
of Patch)

(C)

## FIG.2

Transform (t-1)-th Frame
after matching (t-1)-th Frame
with Reference Frame

Transform t-th Frame after
matching t-th Frame with
Reference Frame

| Reference Frame | | (t-1)-th Frame | t-th Frame | |

ROI

ROI

ROI

Time

Motion between adjacent frames,
i.e., Motion $\mathrm{W}\left(\mathrm{x};\mathrm{h}_{t,t-1}\right)$ between
(t-1)-th Frame and t-th Frame

Motion $\mathrm{W}\left(\mathrm{x};\mathrm{h}_{t-1,0}\right)$ between
Reference Frame
and (t-1)-th Frame

Mask Image $Q_t$ of
t-th Frame

(Only Inside
of ROI)

## FIG.3

Transform t-th Frame after
matching t-th Frame with
Reference Frame

| Reference Frame | | t-th Frame | |

ROI

ROI

Time

Motion $\mathrm{W}\left(\mathrm{x};\mathrm{h}_{t,0}\right)$ between
Reference Frame and t-th Frame

Mask Image
$M_t$ of t-th Frame

(Only Inside
of ROI)

FIG.4

| The First Frame | The 72$^{nd}$ Frame | The 150$^{th}$ Frame | The 240$^{th}$ Frame |

(A) Input Image which showed ROI

(B) Input Image which showed Mask Image $Q_t(x)$ with blue

(C) Mask Image $Q_t(x)$ for tracking in ROI

(D) Mask Image $M_t(x)$ for error correction in ROI

FIG.5

(A)

(B)

(C)

## FIG.6

## FIG.7

The First Frame     The 104th Frame     The 187th Frame     The 283rd Frame

(A) Input Image which showed ROI

(B) Input Image which showed Mask Image $Q_t(x)$ with blue

(C) Mask Image $Q_t(x)$ for tracking in ROI

(D) Mask Image $M_t(x)$ for error correction in ROI

## FIG.8

Mask Image $Q_t(x)$ of the present invention

Mask Image $M_t(x)$ of the present invention

**Area[Pixel]** — $1 \cdot 10^4$ / 5000 / 0

**Frame Number**

(A)

A case after the second step registration of the present invention

A case after the first step registration of the present invention

**Mean SSD** — 60 / 40 / 20 / 0

**Frame Number**

(B)

A case after the registration by the conventional method

**Mean SSD** — 600 / 400 / 200 / 0

**Frame Number**

(C)

# FIG.9

| The First Frame | The 104th Frame | The 460th Frame | The 555th Frame |

(A) Input Image which showed ROI

(B) Input Image which showed Mask Image $Q_t(x)$ with blue

(C) Mask Image $Q_t(x)$ for tracking in ROI

(D) Mask Image $M_t(x)$ for error correction in ROI

## FIG.10

(A)

(B)

(C)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **L. G. BROWN.** A Survey of Image Registration Techniques. *ACM Computing Surveys,* December 1992, vol. 24 (4), 325-376
- **B. ZITOVA ; J. FLUSSER.** FlusserImage Registration Methods: A Survey. *Image and Vision Computing,* October 2003, vol. 21 (11), 977-1000
- **M. BLACK ; A. JEPSON.** Eigen-Tracking: Robust Matching and Tracking of Articulated Objects using a View-Based Representation. *International Journal of Computer Vision,* 1998, vol. 26 (1), 63-84
- **G. D. HAGER ; P. N. BELHUMEUR.** Efficient Region Tracking with Parametric Models of Geometry and Illumination. *IEEE Trans. on Pattern Analysis and Machine Intelligence,* October 1998, vol. 20 (10), 1025-1039
- **T. ISHIKAWA ; I. MATTHEWS ; S. BAKER.** Efficient Image Alignment with Outlier Rejection. *Tech. Report CMU-RI-TR-02-27, Robotics Institute,* October 2002
- **F. JURIE ; M. DHOME.** *Real Time Robust Template Matching,* September 2002, 123-132
- **A. SHASHUA ; Y. WEXLER.** Q-Warping: Direct Computation of Quadratic Reference Surfaces. *IEEE Trans. on Pattern Analysis and Machine Intelligence,* August 2001, vol. 23 (8), 920-925
- **T. F. COOTES ; J. EDWARDS ; C. J. TAYLOR.** Active Appearance Models. *IEEE Trans. on Pattern Analysis and Machine Intelligence,* June 2001, vol. 23 (6), 681-685
- **P. BOUTHEMY ; E. FRANCOIS.** Motion Segmentation and Qualitative Dynamic Scene Analysis from an Image Sequence. *International Journal of Computer Vision,* 1993, vol. 10 (2), 157-182
- **I. PATRAS ; E. A. HENDRIKS ; R. L. LAGENDIJK.** An Iterative Motion Estimation-Segmentation Method using Watershed Segments. *Proc. of IEEE International Conference on Image Processing,* October 1998, vol. 2, 642-646
- **M. M. CHANG ; A. M. TEKALP ; M. I. SEZAN.** Simultaneous Motion Estimation and Segmentation. *IEEE Trans. on Image Processing,* September 1997, vol. 6 (9), 1326-1333
- **M. IRANI ; B. ROUSSO ; S. PELEG.** Computing Occluding and Transparent Motions. *International Journal of Computer Vision,* February 1994, vol. 12 (1
- **T. FUKAO ; T. KANADE.** Two Step Algorithm for Point Feature Tracking with Robustness to Occlusions. *IPSJSIG Notes. CVIM,* November 2003, vol. CVIM-141, 111-118
- **R. FABLET ; P. BOUTHEMY.** Motion Recognition Using Nonparametric Image Motion Models Estimated from Temporal and Multiscale Co-Occurrence Statistics. *IEEE Trans. on Pattern Analysis and Machine Intelligence,* December 2003, vol. 25 (12
- **S. BAKER ; I. MATTHEWS.** Lucas-Kanade 20 Years On: A Unifying Framework. *International Journal of Computer Vision,* March 2004, vol. 56 (3), 221-255
- **M. GLEICHER.** Projective Registration with Difference Decomposition. *Proc. of IEEE International Conference on Computer Vision and Pattern Recognition,* June 1997, 331-337
- **B. LUCAS ; T. KANADE.** An Iterative Image Registration Technique with an Application to Stereo Vision. *Proc. of International Joint Conference on Artificial Intelligence,* April 1981, 674-679
- **H. Y. SHUM ; R. SZELISKI.** Construction of Panoramic Image Mosaics with Global and Local Alignment. *International Journal of Computer Vision,* July 2002, vol. 48 (2), 151-152
- **M. SHIMIZU ; M. OKUTOMI.** Multi-Parameter Simultaneous Estimation on Area-Based Matching. *Internationalof Computer Vision,* 2006
- **S.K. CHANG ; M. SHIMIZU ; M. OKUTOMI.** A Fast Algorithm for Hyperplane-Intersection Method on Image Registration. *The IEICE transactions on information and systems,* February 2006, vol. J89-D (2), 332-343
- **T. KANADE ; M. OKUTOMI.** A Stereo Matching Algorithm with an Adaptive Window: Theory and Experiment. *IEEE Trans. on Pattern Analysis and Machine Intelligence,* September 1994, vol. 16 (9), 920-932
- **M. OKUTOMI ; T. KANADE.** A Multiple Baseline Stereo. *IEEE Trans. on Pattern Analysis and Machine Intelligence,* April 1993, vol. 15 (4), 353-363
- **J. R. BERGEN ; P. ANANDAN ; K. J. HANNA ; R. HINGORANI.** Hierarchical Model-Based Motion Estimation. *Proc. of European Conference on Computer Vision,* 1992, 237-252